(19) Europäisches Patentamt / European Patent Office / Office européen des brevets

(11) **EP 4 659 589 A1**

(12) **EUROPEAN PATENT APPLICATION**
published in accordance with Art. 153(4) EPC

(43) Date of publication:
**10.12.2025 Bulletin 2025/50**

(21) Application number: **24750412.9**

(22) Date of filing: **02.02.2024**

(51) International Patent Classification (IPC):
**A23L 2/66** (2006.01)　　**A23L 2/38** (2021.01)
**A23L 11/60** (2025.01)

(52) Cooperative Patent Classification (CPC):
**A23L 2/38; A23L 2/66; A23L 11/60**

(86) International application number:
**PCT/JP2024/003436**

(87) International publication number:
**WO 2024/162463 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.02.2023 JP 2023015409**

(71) Applicant: **Morinaga Milk Industry Co., Ltd.**
**Minato-ku**
**Tokyo 105-7122 (JP)**

(72) Inventors:
- **TSUDA, Wakana**
  **Zama-shi, Kanagawa 252-8583 (JP)**
- **MIYAI, Teruyuki**
  **Zama-shi, Kanagawa 252-8583 (JP)**
- **KATO, Motohiro**
  **Zama-shi, Kanagawa 252-8583 (JP)**

(74) Representative: **Hoffmann Eitle**
**Patent- und Rechtsanwälte PartmbB**
**Arabellastraße 30**
**81925 München (DE)**

(54) **PROTEIN-CONTAINING BEVERAGE**

(57)　A problem to be solved by the invention is to provide a new protein beverage in which precipitation of the Soy Protein Isolate after heat pasteurization is suppressed and a production method thereof. The invention, which solves the problem, is a protein-containing beverage which contains an Soy Protein Isolate and tofu and in which the total mass of the protein based on the total mass of the protein-containing beverage exceeds 6 mass%.

**EP 4 659 589 A1**

## Description

Technical Field

The present invention relates to a protein-containing beverage.

Background Art

Protein is one of important nutrients for the human body, and various beverages containing protein have been developed to make protein tasty and easy to consume.

One of the protein sources which are often used for protein-containing beverages is an Soy Protein Isolate. Various protein-containing beverages containing an Soy Protein Isolate have been developed so far.

For example, PTL 1 describes a method for producing a protein drink containing an Soy Protein Isolate having a hydrolysis rate of 6 to 25% and a plant extract and a protein drink produced by the production method. It is disclosed that, according to the production method, an increase in the viscosity of a protein drink containing protein at a high concentration and the odor peculiar to soy protein can be suppressed.

Moreover, for example, PTL 2 describes a method for producing a protein beverage having pH 4.5 or less including a step of dissolving a raw material selected from an Soy Protein Isolate and various types of soy milk or the like in water, a step of adding a calcium component to the obtained solution, heating and homogenizing, a step of adding an acidulant and homogenizing and a step of pasteurization treatment and a protein beverage produced by the production method. It is disclosed that degeneration and precipitation of the protein are suppressed in the protein beverage.

Citation List

Patent Literature

PTL 1: JPS60-70042A
PTL 2: JPH05-308900A

Summary of Invention

Technical Problem

Here, protein sometimes precipitates during heat pasteurization in a beverage containing high amount of protein, and there has been a problem in the production.

In the production method described in PTL 1, however, suppression of precipitation of the Soy Protein Isolate during heat pasteurization is not examined.

Moreover, the production method described in PTL 2 is limited to cases in which the pH of the protein beverage is 4.5 or less, and protein-containing beverages having a wide range of pH could not be produced.

Considering the above circumstances, a problem to be solved by the invention is to provide a new protein-containing beverage in which precipitation of the Soy Protein Isolate after heat pasteurization is suppressed and a production method thereof.

Moreover, a Soy Protein Isolate has peculiar acridity, and a protein beverage containing a high amount thereof has strong acridity and is not easy to drink.

By the production method described in Patent Literature 1, however, although the peculiar odor of soy protein can be suppressed, the taste (acridity) is not examined. Moreover, it is necessary to hydrolyze the Soy Protein Isolate, and the production process may become complicated.

Moreover, in the production method described in Cited Document 2, suppression of the acridity of the Soy Protein Isolate is not examined.

Thus, a further problem to be solved by the invention is to provide a new protein-containing beverage in which precipitation of the Soy Protein Isolate after heat pasteurization is suppressed and in which the acridity derived from the Soy Protein Isolate is suppressed and a production method thereof.

Solution to Problem

The invention, which solves the problem, is a protein-containing beverage which contains a Soy Protein Isolate and tofu and in which the total mass of the protein based on the total mass of the protein-containing beverage exceeds 6 mass%.

According to the invention, precipitation of the protein after heat pasteurization can be suppressed.

In a preferable embodiment of the invention, the total mass of the solid content of the tofu based on the total mass of the protein-containing beverage is 1 to 15 mass%.

According to the invention, precipitation of the protein after heat pasteurization can be suppressed. Moreover, by adjusting the solid content of the tofu at a predetermined content, the Soy Protein Isolate content can be suppressed to a small amount, and thus, the acridity derived from the Soy Protein Isolate contained in the protein-containing beverage can be suppressed.

In a preferable embodiment of the invention, the total mass of the Soy Protein Isolate based on the total mass of the protein is 40 to 90 mass%.

According to the invention, precipitation of the protein after heat pasteurization can be suppressed. Moreover, by adjusting the Soy Protein Isolate at a predetermined content, the acridity derived from the Soy Protein Isolate contained in the protein-containing beverage can be suppressed.

In a preferable embodiment of the invention, the total mass of the protein is 2 to 6 when the total mass of the fat is regarded as 1.

In a preferable embodiment of the invention, the Soy Protein Isolate satisfies the condition below when measured by the measurement method below.

[Measurement Method]

Step A: An aqueous dispersion containing the Soy Protein Isolate at 6 mass% and the tofu at 6.7 mass% as the mass of the solid content is prepared.

Step B: The aqueous dispersion to be heat pasteurized under the condition at 85°C for 10 minutes.

Step C: The aqueous dispersion after the heat pasteurization to be homogenized at 5 MPa using a pressure homogenizer.

[Condition]

The flow rate of the aqueous dispersion after the heat pasteurization in the pressure homogenizer is 160 to 200 L/H in the step C.

According to the invention, precipitation of the protein after heat pasteurization can be suppressed. Moreover, the acridity derived from the Soy Protein Isolate contained in the protein-containing beverage can be suppressed.

The invention, which solves the problem, is a method for producing a protein-containing beverage including a step of dissolving raw materials containing protein in water in which the raw materials containing protein are at least an Soy Protein Isolate and tofu and in which the step of dissolving the raw materials containing protein in water is a step of dissolving the raw materials containing protein in water in such a manner that the total mass of the protein based on the total mass of the obtained protein-containing beverage exceeds 6 mass%.

According to the invention, a protein-containing beverage in which precipitation of the protein after heat pasteurization is suppressed can be produced.

In a preferable embodiment of the invention, the Sot Protein Isolate and the tofu are mixed in such a manner that the total mass of the solid content of the tofu based on the total mass of the protein-containing beverage becomes 1 to 15 mass%.

According to the invention, a protein-containing beverage in which precipitation of the protein after heat pasteurization is suppressed can be produced. Moreover, by adjusting the solid content of the tofu at a predetermined content, the Soy Protein Isolate content can be suppressed to a small amount, and thus, a protein-containing beverage in which the acridity derived from the Soy Protein Isolate is suppressed can be produced.

In a preferable embodiment of the invention, the Soy Protein Isolate is mixed in such a manner that the total mass of the Soy Protein Isolate based on the total mass of the protein becomes 40 to 90 mass%.

According to the invention, a protein-containing beverage in which precipitation of the protein after heat pasteurization is suppressed can be produced. Moreover, by adjusting the Soy Protein Isolate at a predetermined content, a protein-containing beverage in which the acridity derived from the Soy Protein Isolate is suppressed can be produced.

In a preferable embodiment of the invention, the Soy Protein Isolate satisfies the condition below when measured by the measurement method below.

[Measurement Method]

Step A: An aqueous dispersion containing the Soy Protein Isolate at 6 mass% and the tofu at 6.7 mass% as the mass of the solid content is prepared.

Step B: The aqueous dispersion is heat pasteurized under the condition at 85°C for 10 minutes.

Step C: The aqueous dispersion after the heat pasteurization is homogenized at 5 MPa using a pressure homogenizer.

[Condition]

The flow rate of the aqueous dispersion after the heat pasteurization in the pressure homogenizer is 160 to 200 L/H in the step C.

According to the invention, a protein-containing beverage in which precipitation of the protein after heat pasteurization is suppressed can be produced. Moreover, a protein-containing beverage in which the acridity derived from the Soy Protein Isolate is suppressed can be produced.

Advantageous Effects of Invention

According to the invention, a protein-containing beverage in which precipitation of the protein after heat pasteurization is suppressed can be obtained.

In a preferable embodiment of the invention, a protein-containing beverage in which precipitation of the protein after heat pasteurization is suppressed and in which the acridity derived from the Soy Protein Isolate is suppressed can be produced.

Description of Embodiments

In the present specification, "to" cited in a numerical range includes the upper limit value and the lower limit value of the numerical range.

<Protein-Containing Beverage>

The protein-containing beverage according to the invention contains an Soy Protein Isolate and tofu.

According to the invention, precipitation of the protein after heat pasteurization can be suppressed.

In the invention, as the Soy Protein Isolate (SPI), an Soy Protein Isolate which is generally commercially available can be used without any particular restriction.

The Soy Protein Isolate preferably satisfies the condition below when measured by the measurement method below.

[Measurement Method]

Step A: An aqueous dispersion containing the Soy Protein Isolate at 6 mass% and the tofu at 6.7 mass% as the mass of the solid content is prepared.

Step B: The aqueous dispersion is heat pasteurized under the condition at 85°C for 10 minutes.

Step C: The aqueous dispersion after the heat pasteurization is homogenized at 5 MPa using a pressure homogenizer.

[Condition]

The flow rate of the aqueous dispersion after the heat pasteurization in the pressure homogenizer is 160 to 200 L/H in the step C.

According to the invention, a protein-containing beverage can be prepared regardless of the pH of the protein-containing beverage.

Moreover, according to the invention, precipitation can be suppressed when the protein-containing beverage is left still, and even when a precipitate is formed, the precipitate can be easily suspended again.

Furthermore, the acridity derived from the soy protein can be suppressed.

In a preferable embodiment of the invention, the flow rate of the aqueous dispersion after the heat pasteurization in the pressure homogenizer is 180 to 190 L/H in the "Condition" above.

In a preferable embodiment of the invention, when 30 mL of an aqueous dispersion after heat pasteurization prepared according to the "Measurement Method" above is centrifuged at 2000 rpm for 10 minutes, the amount of the formed precipitate is 10 mL or less, more preferably 8 mL or less, more preferably 6 mL or less, still further preferably 5 mL or less, still further preferably 4.8 mL or less, still further preferably 4.5 mL or less.

According to the invention, precipitation of the protein after heat pasteurization can be suppressed.

Moreover, the rough texture of the protein-containing beverage can be suppressed.

Furthermore, precipitation can be suppressed when the protein-containing beverage is left still, and even when a precipitate is formed, the precipitate can be easily suspended again.

In the invention, as the tofu, formed tofu obtained by coagulating soy milk with a coagulant, tofu puree obtained by crushing a coagulated material obtained by adding a coagulant to soy milk or the like can be used. The coagulant is not particularly limited as long as the coagulant is used for producing tofu, and for example, magnesium chloride, calcium chloride, gluconodeltalactone or the like can be used.

The formed tofu may be silken tofu, Momen tofu, *juten* tofu (tofu formed directly in packaging) or the like and can be used without any particular limitation.

When formed tofu is used, one kind of tofu may be used, or a combination of two or more kinds may also be used. Moreover, commercially available tofu may be used, or the tofu may be produced by a generally known production method.

The tofu is preferably tofu puree because tofu puree easily mixes with other materials.

Here, the tofu in the invention is produced using soy milk obtained by squeezing soybeans and thus is different from soybean flour, which is produced by crushing soybeans.

In the present specification, the tofu puree is prepared in a semi-liquid form by crushing a coagulated material obtained by adding a coagulant to soy milk. The tofu puree is not formed and thus is different from formed tofu such as silken tofu, medium tofu and *juten* tofu (tofu formed directly in packaging).

The tofu puree can be produced, for example, by the method disclosed in WO1999/35920.

Specifically, the tofu puree can be produced by obtaining a coagulated material by adding a coagulant to soy milk and maintaining at 40 to 90°C, crushing the coagulated material, cooling to 10 to 35°C and further crushing the crushed material to an average particle size of 2 to 15 $\mu$m and a 90% particle size of 35 $\mu$m or less.

When the tofu puree is used as the tofu, the tofu puree preferably has the physicochemical properties a) to d) below.

a) The viscosity is 20 to 3,000 mPa·s.
b) The dynamic storage modulus is 0.2 to 600 Pa.
c) The dynamic loss modulus is 0.2 to 250 Pa.
d) The particles contained in the tofu puree have an average particle size of 2 to 15 $\mu$m and a 90% particle size of 35 $\mu$m or less.

According to the invention, the precipitate amount of the Soy Protein Isolate after heat pasteurization can be decreased.

Moreover, the acridity derived from the Soy Protein Isolate can be suppressed.

Furthermore, a stable protein-containing beverage can be obtained even when the pH of the protein-containing beverage is at an acid side or a basic side.

Here, the "viscosity" in the physicochemical property a) is a viscosity measured by leaving the produced tofu puree still at 10°C for 24 hours and then measuring using a B-type viscometer (for example, DV L-BII: manufactured by TOKIMEC INC.) to which a No. 2 or No. 4 rotor is attached at a rotor rotation speed of 60 rpm.

The "dynamic storage modulus" in the physicochemical property b) and the "dynamic loss modulus" in the physicochemical property c) are numerical values measured by leaving the produced tofu puree still at 10°C for 24 hours and then measuring using ARES viscoelasticity measurement system (for example, ARES viscoelasticity measurement system: Rheometric Scientific F.E. Ltd.) at a frequency of 50.0 rad/s.

Furthermore, the "average particle size" in the physicochemical property d) refers to a particle size corresponding to 50% in a cumulative distribution of the particles based on volume obtained by leaving the produced tofu puree still at 10°C for 24 hours and then measuring using a laser diffraction particle size distribution analyzer (LA-500: HORIBA, Ltd.), and the "90% particle size" similarly refers to a particle size corresponding to 90% in the cumulative distribution of the particles based on volume.

The protein-containing beverage of the invention may contain protein other than the Soy Protein Isolate and the tofu-derived protein. For example, an animal protein such as milk protein (casein·whey) or a plant protein derived from a plant other than soybeans such as pea protein can be contained.

In view of the flavor of the protein-containing beverage, the protein other than the Soy Protein Isolate and the tofu-derived protein is preferably a plant protein derived from a plant other than soybeans.

In the invention, the total mass of the protein based on the total mass of the protein-containing beverage exceeds 6 mass%.

The total mass of the protein based on the total mass of the protein-containing beverage is preferably 6.3 mass% or more, more preferably 6.5 mass% or more, further preferably 6.8 mass% or more, still further preferably 7 mass% or more, still further preferably 7.3 mass% or more, still further preferably 7.5 mass% or more, still further preferably 7.8 mass% or more, still further preferably 8 mass% or more, still further preferably 8.3 mass% or more.

Moreover, the upper limit of the total mass of the protein based on the total mass of the protein-containing beverage can be appropriately set depending on the production suitability or the desired nutritional composition, and can be, for example, 25 mass% or less, preferably 23 mass% or less, more preferably 20 mass% or less, further preferably 18 mass% or less, still further preferably 15 mass% or less, still further preferably 13 mass%, still further preferably 10 mass% or less.

According to the invention, protein can be consumed easily.

In a preferable embodiment of the invention, the total mass of the solid content of the tofu based on the total mass of the protein-containing beverage is 1 to 15 mass%. The total mass is more preferably 1.5 to 14.5 mass%, further preferably 2 to 14 mass%, still further preferably 2.5 to 13.5 mass%, still further preferably 3 to 13 mass%, still further preferably 3.5 to 12.5 mass%, still further preferably 4 to 12 mass%, still further preferably 4 to 11.5 mass%, still further preferably 4.5 to 11 mass%, still further preferably 5 to 11 mass%, still further preferably 5.5 to 10.5 mass%, still further preferably 6 to 10 mass%.

According to the invention, precipitation of the Soy Protein Isolate after heat pasteurization can be suppressed. Moreover, by adjusting the solid content of the tofu at a predetermined content, the Soy Protein Isolate content can be suppressed to a small amount, and thus, the acridity derived from the Soy Protein Isolate contained in the protein-containing beverage can be suppressed.

In the invention, the total mass of the solid content of the tofu based on the total mass of the protein-containing beverage is a numerical value calculated by (Equation 1) below based on the mass of the tofu used for preparing the beverage.

Total mass of solid content of tofu based on total mass of protein-containing beverage = (total mass of solid content of tofu)/(total mass of protein-containing beverage) $\times$ 100     (Equation 1)

In (Equation 1), the total mass of the solid content of the tofu is a numerical value calculated as follows:

Total mass of solid content of tofu (mass%) = 100 - water content of tofu (mass%)     (Equation 2)

In (Equation 2), the water content (mass%) is a value measured by a normal pressure heat drying method (a drying agent addition method). Specifically, the water content is determined by (Equation 3) below by drying 1 g of a collected sample at a drying temperature of 100±1°C to determine the sample mass after drying.

Water content (mass%) = {{sample mass before drying - sample mass after drying) /sample mass before drying} $\times$ 100     (Equation 3)

In a preferable embodiment of the invention, the total mass of the Soy Protein Isolate based on the total mass of the protein is 40 to 90 mass%. The total mass is more preferably 43 to 88 mass%, further preferably 45 to 85 mass%, still further preferably 48 to 83 mass%, still further preferably 50 to 80 mass%, still further preferably 50 to 78 mass%, still further preferably 50 to 70 mass%, still further preferably 50 to 68 mass%, still further preferably 50 to 65 mass%.

According to the invention, precipitation of the Soy Protein Isolate after heat pasteurization can be suppressed. Moreover, by adjusting the Soy Protein Isolate at a predetermined content, the acridity derived from the Soy Protein Isolate can be suppressed.

In a preferable embodiment of the invention, the total mass of the protein is 2 to 6 when the total mass of the fat is regarded as 1. The total mass of the protein is preferably 2.5 to 5.5, more preferably 3 to 5, when the total mass of the fat is regarded as 1.

The protein-containing beverage of the invention may contain a component other than the above components.

In a preferable embodiment of the invention, the pH of the protein-containing beverage is 3 or more, preferably 3.5 or more, more preferably 4 or more, further preferably 4.5 or more, still further preferably 5 or more, still further preferably 5.5 or more, still further preferably 6.0 or more.

In a preferable embodiment of the invention, the pH of the protein-containing beverage is 7.5 or less, preferably 7.2 or less.

<Production Method of Protein-Containing Beverage>

The protein-containing beverage of the invention can be produced by mixing an Soy Protein Isolate and tofu and adding and mixing any other component according to the need.

Specifically, the protein-containing beverage can be produced by the production method described below.

The protein-containing beverage of the invention includes a step of dissolving raw materials containing protein in water in such a manner that the total mass of the protein based on the total mass of the obtained protein-containing beverage exceeds 6 mass%.

The raw materials containing protein are at least an Soy Protein Isolate and tofu.

According to the invention, a protein-containing beverage in which precipitation of the Soy Protein Isolate after heat pasteurization is suppressed can be produced.

In the invention, the items described above can be applied to the Soy Protein Isolate and the tofu as the raw materials containing protein and preferable embodiments thereof.

Moreover, in the invention, the raw materials containing protein may be the Soy Protein Isolate and the tofu only, or a raw material containing protein other than the Soy Protein Isolate and the tofu may be contained.

The items described above can be applied to the raw material containing protein other than the Soy Protein Isolate and the tofu.

In a preferable embodiment of the invention, in the step of dissolving the raw materials containing protein in water, the raw materials containing protein are dissolved in water in such a manner that the total mass of the protein based on the total mass of the protein-containing beverage exceeds 6 mass%.

According to the invention, a protein beverage which allows easy consumption of protein can be produced.

The items described above can be applied to preferable embodiments of the total mass of the protein based on the total mass of the protein-containing beverage.

In a preferable embodiment of the invention, the Soy Protein Isolate and the tofu are mixed in such a manner that the total mass of the solid content of the tofu based on the total mass of the protein-containing beverage becomes 40 to 90 mass%.

According to the invention, a protein-containing beverage in which precipitation of the Soy Protein Isolate after heat pasteurization is suppressed can be produced. Moreover, by adjusting the solid content of the tofu at a predetermined content, the Soy Protein Isolate content can be suppressed to a small amount, and thus, a protein-containing beverage in which the acridity derived from the Soy Protein Isolate is suppressed can be produced.

The items described above can be applied to preferable embodiments of the total mass of the solid content of the tofu based on the total mass of the protein-containing beverage.

In a preferable embodiment of the invention, the Soy Protein Isolate is mixed in such a manner that the total mass of the Soy Protein Isolate based on the total mass of the protein becomes 40 to 90 mass%.

According to the invention, a protein-containing beverage in which precipitation of the Soy Protein Isolate after heat pasteurization is suppressed can be produced. Moreover, by adjusting the Soy Protein Isolate at a predetermined content, a protein-containing beverage in which the acridity derived from the Soy Protein Isolate is suppressed can be produced.

The items described above can be applied to preferable embodiments of the total mass of the Soy Protein Isolate based on the total mass of the protein.

In a preferable embodiment of the invention, the raw materials containing protein and any other raw material according to the need are mixed in such a manner that the total mass of the protein becomes 2 to 6 when the total mass of the fat is regarded as 1.

In a preferable embodiment of the invention, a step of adjusting the pH of the protein-containing beverage at 3 or more is included.

The items described above can be applied to preferable embodiments of the total mass of the protein when the total mass of the fat is regarded as 1 and the pH of the protein-containing beverage.

In a preferable embodiment of the invention, a step of homogenizing a solution in which the raw materials containing protein are dissolved is included. The pressure for the homogenization is not particularly limited, and is preferably 2 to 25 MPa, more preferably 3 to 20 MPa, still further preferably 4 to 10 MPa.

According to the invention, a protein-containing beverage having a smooth texture can be produced.

The condition of the homogenization can be designed by a general method based on the Soy Protein Isolate and tofu contents and the like.

For the homogenization, a known apparatus (homogenizer) can be used.

In a preferable embodiment of the invention, a pasteurization step of pasteurizing the protein-containing beverage is included. The condition of the pasteurization is not particularly limited, and heat pasteurization is preferable. A known apparatus and a known method can be used for the heat pasteurization step. The heat pasteurization can be conducted, for example, by heat pasteurizing at a temperature between 62 to 65°C for 30 minutes or heating by a method having the equivalent or higher pasteurization effect. The pasteurization condition can be appropriately set according to the characteristics of the raw material composition, the pasteurizer (pasteurization style) used, the container or the like.

For example, in the case of UHT pasteurization, the condition is at 120 to 155°C for around one to 120 seconds, preferably at 130 to 150°C for around 1.5 to 30 seconds.

In the invention, because the Soy Protein Isolate and the tofu are contained, protein does not precipitate even after a pasteurization step. Therefore, according to the invention, a pasteurized protein beverage in which precipitation of the Soy Protein Isolate after heat pasteurization is suppressed can be produced.

Here, the timing of the pasteurization is not particularly restricted.

The production method of the invention may include an optional step other than the steps described above, such as a step of adding an optional component and a step of filling a packaging container with the protein-containing beverage.

In the step of adding an optional component, examples of the optional component include an emulsifier, a pH-adjusting agent, a preservative, an flavor, a fruit, a fruit juice and the like, and the optional component is not limited thereto.

The step of filling a packaging container with the protein-containing beverage is preferably conducted in a sterile environment. The form of the container is not particularly limited, and a can, a paper container, a PET bottle, a plastic container or the like can be preferably used. Through the filling step, a container-packed protein-containing beverage can be produced.

Examples

The invention is explained in more detail below referring to Examples, but the technical scope of the invention is not limited to the Examples below.

The raw materials used in the Test Examples are as follows:

Tofu puree: manufactured by Pacific Nutritional Foods, product name "Silken Soy Puree", protein content of 4.8%, fat content of 2.9 mass%, solid content of 10.3 mass%. When the physicochemical properties a) to d) were measured by the measurement methods described above, a) the viscosity was 74 mPa·s, b) the dynamic storage modulus was 1.0 Pa, c) the dynamic loss modulus was 0.9 Pa, and d) the particles contained in the tofu puree had an average particle size of 4.2 $\mu$m and a 90% particle size of 6.8 $\mu$m.

Soy protein a: manufactured by ADM Japan Ltd., product name "Propham 825", protein content of 90%

Soy protein b: supplied by International Flavors & Fragrances Inc, product name "SUPRO (registered trademark) XT 55", protein content of 90%

Soy protein c: supplied by International Flavors & Fragrances Inc, product name "SUPRO (registered trademark) 710", protein content of 90%

Soy protein d: supplied by International Flavors & Fragrances Inc, product name "SUPRO (registered trademark) 670", protein content of 90%

Soy protein e: supplied by ADM Japan Ltd., product name "Propham 827", protein content of 90%

Soy protein f: supplied by International Flavors & Fragrances Inc, product name "SUPRO (registered trademark) XT 219", protein content of 90%

Beet granulated sugar: manufactured by Hokuren, product name "HBS beet granulated sugar"

Defoamer: manufactured by Kao Corporation, product name "KURETON WIDE LV"

Sodium hydroxide: manufactured by Tosoh Corporation, product name "Tosoh Pearl", sodium hydroxide content of 98.5%

<Test Example 1>

(1) Object

In this Test Example, the presence and the absence of tofu and the changes in a physical property through pasteurization of protein-containing beverages at pH = 6.8 were examined.

(2) Preparation of Samples

Samples 1 to 6 were prepared based on the compositions shown in Table 1. The samples 1 to 3 are samples containing an Soy Protein Isolate alone as the protein raw material, and the samples 4 to 6 are samples containing an Soy Protein Isolate and tofu puree as the protein raw materials. The protein contents of the samples 1 to 6 are 8.5 mass%.

First, for the samples 1 to 3, an Soy Protein Isolate was dissolved in water which was warmed to 40°C. For the samples 4 to 6, an Soy Protein Isolate was dissolved in a mixture obtained by dispersing the tofu puree in water which was warmed to 40°C.

Next, the solution in which the Soy Protein Isolate was dissolved or the solution in which the Soy Protein Isolate and the tofu were dissolved was stirred with a Homo Mixer (manufactured by PRIMIX Corporation), and the defoamer was added. The pH was adjusted to 6.8 using the aqueous sodium hydroxide solution, and the solution was subjected to batch pasteurization treatment at 85°C for 10 minutes and cooled to 5°C.

In Table 1, the units of the raw material contents are mass%. In Test Examples 2 to 4 described below, the same applies unless otherwise specified.

[Table 1]

[Table 1]

| Raw Material Name | Sample 1 | Sample 2 | Sample 3 | Sample 4 | Sample 5 | Sample 6 |
|---|---|---|---|---|---|---|
| Protein a | 9.44 | - | - | 6.11 | - | - |
| Protein b | - | 9.44 | - | - | 6.11 | - |
| Protein c | - | - | 9.44 | - | - | 6.11 |
| Defoamer | 0.005 | 0.005 | 0.005 | 0.005 | 0.005 | 0.005 |
| 10% Sodium hydroxide | 0.024 | 0.006 | - | 0.13 | - | - |
| Tofu puree | - | - | - | 62.5 | 62.5 | 62.5 |
| Dissolving water for soymilk mix | 90.531 | 90.549 | 90.555 | 31.255 | 31.385 | 31.385 |
| Total | 100 | 100 | 100 | 100 | 100 | 100 |
| Total mass of solid content of tofu based on total mass of protein-containing beverage (mass%) | - | - | - | 6.4 | 6.4 | 6.4 |
| Total mass of Soy Protein Isolate based on total mass of protein (mass%) | 100.0 | 100.0 | 100.0 | 64.7 | 64.7 | 64.7 |
| Total mass of protein when total mass of fat is regarded as 1 (mass%) | 0 | 0 | 0 | 4.7 | 4.7 | 4.7 |
| Average Centrifugal Precipitate Amount (mL) | 8.5 | 11.5 | 7.75 | 5.75 | 7.8 | 5.0 |
| (Unless otherwise specified, the units of the raw material contents are mass%.) | | | | | | |

(3) Measurement of Centrifugal Precipitate Amount

After the samples 1 to 6 obtained above were left still at 5°C for three hours, 30 ml thereof were centrifuged (2000 rpm, 10 minutes) using a centrifuge (CT6E tabletop centrifuge: manufactured by Eppendorf Himac Technologies Co., Ltd.), and the centrifugal precipitate amounts (ml) were measured. The measurement was made with n = 2, and the average values of two measurements were calculated.

(4) Results

The results are shown in Table 1.

As it is obvious from Table 1, the precipitate amounts of the samples 4 to 6, which contained an Soy Protein Isolate and the tofu puree as the protein raw materials, after pasteurization decreased compared to those of the samples 1 to 3, which contained an Soy Protein Isolate alone as the protein raw material. From the results of the Test Example, it was found that a protein-containing beverage in which generation of the precipitate amount after pasteurization is suppressed is obtained by combining tofu and an Soy Protein Isolate. The effect was unrelated to the kind of the Soy Protein Isolate.

<Test Example 2>

(1) Object

In Test Example 2, the changes in physical properties through pasteurization of protein-containing beverages containing tofu puree and soy protein in the neutral range (pH = 6.8) were examined.

(2) Preparation of Samples

Samples 7 to 11 were prepared based on the compositions shown in Table 2.

The sugar was mixed with the soy proteins b to f in advance.

Next, while the tofu puree warmed to 40°C was stirred, a mixture of the sugar and the soy protein, the defoamer, sodium hydroxide and dissolving water were added in this order and mixed.

Then, pasteurization treatment was conducted at 85°C for 10 minutes, and preliminary homogenization was conducted using a Homo Mixer (5500 rpm, three minutes). The evaluation described below (the viscosity, the centrifugal precipitate amount and the sensory evaluation) was conducted using the samples after the preliminary homogenization (also called "preliminarily homogenized mixes" below).

The preliminarily homogenized mixes were further homogenized using a homogenizer (H3-1D: manufactured by Sanmaru Machinery Co., Ltd.) at a pressure of 5 MPa. The samples after the homogenization treatment (also called "mixes after homogenization" below) were also evaluated (the viscosity, the centrifugal precipitate amount and the sensory evaluation). The mixes after homogenization were cooled to 20°C, and thus, the samples 7 to 11 were obtained.

[Table 2]

[Table 2]

| Raw Material Name | Raw Material Composition (mass%) | | | | |
|---|---|---|---|---|---|
| | Sample 7 | Sample 8 | Sample 9 | Sample 10 | Sample 11 |
| Tofu puree | 64.6 | 64.6 | 64.6 | 64.6 | 64.6 |
| Soy protein c | 6 | - | - | - | - |
| Soy protein d | - | 6 | - | - | - |
| Soy protein e | - | - | 6 | - | - |
| Soy protein f | - | - | - | 6 | - |
| Soy protein b | - | - | - | - | 6 |
| Sugar | 10 | 10 | 10 | 10 | 10 |
| Defoamer | 0.1 | 0.1 | 0.1 | 0.1 | 0.1 |
| Sodium hydroxide | 0.01 | 0.02 | 0.02 | 0.01 | 0.02 |
| Dissolving water | 19.29 | 19.28 | 19.28 | 19.29 | 19.28 |
| Total | 100 | 100 | 100 | 100 | 100 |
| Total mass of solid content of tofu based on total mass of protein-containing beverage (mass%) | 6.7 | 6.7 | 6.7 | 6.7 | 6.7 |
| Total mass of Soy Protein Isolate based on total mass of protein (mass%) | 63.5 | 63.5 | 63.5 | 63.5 | 63.5 |
| Total mass of protein when total mass of fat is regarded as 1 (mass%) | 4.5 | 4.5 | 4.5 | 4.5 | 4.5 |

(2) Measurement of Viscosity

The preliminarily homogenized mixes and the mixes after homogenization were left still at 5°C for three hours, and then the viscosities were measured using a B-type viscometer (RB-80 viscometer: manufactured by Toki Sangyo Co., Ltd) at a rotor rotation speed of 60 rpm. As the rotor, a No. 1, No. 2 or No. 3 rotor was used.

(3) Measurement of Centrifugal Precipitate Amount

In the same method as in Test Example 1, the centrifugal precipitate amounts (ml) of the samples were measured. The measurement was made with n = 2, and the average values of two measurements were calculated.

(4) Sensory Evaluation Test

Panels skilled in the field of beverages tasted the preliminarily homogenized mixes and the mixes after homogenization and evaluated by the criteria below.

Here, the "roughness" is a texture of particles felt in the oral cavity when the sample is taken in the mouth.

(Evaluation Criteria)

5: Roughness or chalkiness is not felt.
4; When the sample is swallowed, a slightly floury texture remains in the throat.
3; When the sample is swallowed, a chalky texture remains in the throat.
2; Roughness is felt with the tongue after a while when the sample is taken in the mouth.
1; Roughness is felt with the tongue at the moment when the sample is taken in the mouth.

(5) Results

The evaluation results of the preliminarily homogenized mixes are shown in Table 3. As shown in Table 3, the samples 7 to 9, in which the centrifugal precipitate amounts were less than 8.5, had excellent homogenization suitability or slightly instable homogenization suitability but to an extent that the sample could pass through the homogenizer. On the other hand, the samples 10 and 11, in which the precipitate amounts were 8.5 or more, had many aggregates and could not pass through the homogenizer.

[Table 3]

[Table 3]

|  | Protein | Viscosity (mPa·s) | Average Centrifugal Precipitate Amount (mL) | Physical Property (Sensory) | Homogenization Suitability |
|---|---|---|---|---|---|
| Sample 7 | Protein c | 175 | 4.55 | 4 | Excellent |
| Sample 8 | Protein d | 137.5 | 4.0 | 4 | Excellent |
| Sample 9 | Protein e | 107.5 | 5.0 | 2 | Instable, but could pass through. |
| Sample 10 | Protein f | 140 | 8.5 | 2 | Could not pass through. |
| Sample 11 | Protein b | 121.5 | 9.5 | 2 | Could not pass through. |

The evaluation results of the mixes after homogenization of the samples 7 to 9, in which the preliminarily homogenized mixes could pass through, are shown in Table 4. As shown in Table 4, the samples 7 to 9 were protein-containing beverages which had a low precipitate amount and slight roughness and which were easy to drink. In particular, the samples 7 and 8, in which the soy proteins c and d were used, were beverages which had a low centrifugal precipitate amount, had no roughness or chalkiness at all and had excellent smoothness.

[Table 4]

[Table 4]

|  | Protein | Viscosity (mPa·s) | Average Centrifugal Precipitate Amount (mL) | Physical Property (Sensory) |
|---|---|---|---|---|
| Sample 7 | Protein c | 44 | 0.25 | 5 |
| Sample 8 | Protein d | 45 | 0.475 | 5 |
| Sample 9 | Protein e | 38.5 | 3 | 5 |

<Test Example 3>

(1) Object

In Test Example 3, the changes in physical properties through pasteurization of protein-containing beverages containing tofu puree and soy protein in the neutral range (pH = 5.5) were examined.

(2) Preparation of Samples

Samples 12 to 16 were prepared based on the compositions shown in Table 5. The preparation was conducted in the same procedures as those in Test Example 2 except that the sodium hydroxide in Test Example 2 was replaced with a 10% citric acid solution.

[Table 5]

[Table 5]

| Raw Material Name | Raw Material Composition (mass%) | | | | |
|---|---|---|---|---|---|
| | Sample 12 | Sample 13 | Sample 14 | Sample 15 | Sample 16 |
| Tofu puree | 64.6 | 64.6 | 64.6 | 64.6 | 64.6 |
| Soy protein c | 6 | - | - | - | - |
| Soy protein d | - | 6 | - | - | - |
| Soy protein e | - | - | 6 | - | - |
| Soy protein f | - | - | - | 6 | - |
| Soy protein b | - | - | - | - | 6 |
| Sugar | 10 | 10 | 10 | 10 | 10 |
| Defoamer | 0.1 | 0.1 | 0.1 | 0.1 | 0.1 |
| Citric acid | 0.12 | 0.14 | 0.17 | 0.12 | 0.16 |
| Dissolving water | 19.18 | 19.16 | 19.13 | 19.18 | 19.14 |
| Total | 100 | 100 | 100 | 100 | 100 |
| Total mass of solid content of tofu based on total mass of protein-containing beverage (mass%) | 6.7 | 6.7 | 6.7 | 6.7 | 6.7 |
| Total mass of Soy Protein Isolate based on total mass of protein (mass%) | 63.5 | 63.5 | 63.5 | 63.5 | 63.5 |
| Total mass of protein when total mass of fat is regarded as 1 (mass%) | 4.5 | 4.5 | 4.5 | 4.5 | 4.5 |

(2) Evaluation Method

The measurement of the viscosities and the centrifugal precipitate amounts and the sensory evaluation test were conducted by the same methods as those in Test Example 2.

(3) Results

The evaluation results of the mixes before homogenization are shown in Table 6. As shown in Table 6, the samples 12 to 14 had excellent homogenization suitability. On the other hand, the samples 15 and 16 had many aggregates and could not pass through the homogenizer.

[Table 6]

[Table 6]

|  | Protein | Viscosity (mPa·s) | Average Centrifugal Precipitate Amount (mL) | Physical Property (Sensory) | Homogenization Suitability |
|---|---|---|---|---|---|
| Sample 12 | Protein c | 479 | 8 | 3 | Excellent |
| Sample 13 | Protein d | 258.5 | 7.5 | 3 | Excellent |
| Sample 14 | Protein e | 486.5 | 9.25 | 2 | Excellent |
| Sample 15 | Protein f | 246 | 9 | 2 | Could not pass through. |
| Sample 16 | Protein b | 624 | 11 | 2 | Could not pass through. |

The evaluation results of the mixes after homogenization of the samples 12 to 14, in which the preliminarily homogenized mixes could pass through, are shown in Table 7. As shown in Table 7, the samples 12 to 14 were protein-containing beverages which had a low precipitate amount and slight roughness and which were easy to drink. In particular, the samples 12 and 13, in which the soy proteins c and d were used, were beverages which had a low centrifugal precipitate amount, had no roughness or chalkiness at all and had excellent smoothness.

[Table 7]

[Table 7]

|  | Protein | Viscosity (mPa·s) | Average Centrifugal Precipitate Amount (ml) | Physical Property (Sensory) |
|---|---|---|---|---|
| Sample 12 | Protein c | 260 | 1.75 | 5 |
| Sample 13 | Protein d | 138.5 | 3.5 | 5 |
| Sample 14 | Protein e | 171 | 7 | 4 |

<Test Example 4>

(1) Object

In Test Example 4, the changes in physical properties through pasteurization of protein-containing beverages containing tofu puree and soy protein in the acidic range (pH = 3.8) were examined.

(2) Preparation of Samples

Samples 17 to 21 were prepared based on the compositions shown in Table 8. The preparation was conducted in the same procedures as those in Test Example 2 except that the sodium hydroxide in Test Example 2 was replaced with a 10% aqueous citric acid solution.

[Table 8]

[Table 8]

| Raw Material Name | Raw Material Composition (mass%) | | | | |
|---|---|---|---|---|---|
| | Sample 17 | Sample 18 | Sample 19 | Sample 20 | Sample 21 |
| Tofu puree | 64.6 | 64.6 | 64.6 | 64.6 | 64.6 |
| Soy protein c | 6 | - | - | - | - |
| Soy protein d | - | 6 | - | - | - |
| Soy protein e | - | - | 6 | - | - |
| Soy protein f | - | - | - | 6 | - |
| Soy protein b | - | - | - | - | 6 |
| Sugar | 10 | 10 | 10 | 10 | 10 |
| Defoamer | 0.1 | 0.1 | 0.1 | 0.1 | 0.1 |
| Citric acid | 1.26 | 1.21 | 1.4 | 1.28 | 1.16 |
| Dissolving water | 18.04 | 18.09 | 17.9 | 18.02 | 18.14 |
| Total | 100 | 100 | 100 | 100 | 100 |
| Total mass of solid content of tofu based on total mass of protein-containing beverage (mass%) | 6.7 | 6.7 | 6.7 | 6.7 | 6.7 |
| Total mass of Soy Protein Isolate based on total mass of protein (mass%) | 63.5 | 63.5 | 63.5 | 63.5 | 63.5 |
| Total mass of protein when total mass of fat is regarded as 1 (mass%) | 4.5 | 4.5 | 4.5 | 4.5 | 4.5 |

(2) Evaluation Method

The measurement of the viscosities and the centrifugal precipitate amounts and the sensory evaluation test were conducted by the same methods as those in Test Example 2.

The evaluation results of the preliminarily homogenized mixes are shown in Table 9. As shown in Table 9, the samples 17 to 19, in which the centrifugal precipitate amounts were less than 9.5, had excellent homogenization suitability or slightly instable homogenization suitability but to an extent that the sample could pass through. On the other hand, the samples 20 and 21, in which the precipitate amounts were 9.5 or more, had many aggregates and could not pass through the homogenizer.

[Table 9]

[Table 9]

| | Protein | Viscosity (mPa·s) | Centrifugal Precipitate Amount (ml) | Physical Property (Sensory) | Homogenization Suitability |
|---|---|---|---|---|---|
| Sample 17 | Protein c | 532 | 7.5 | 3 | Excellent |
| Sample 18 | Protein d | 610 | 7.75 | 3 | Excellent |
| Sample 19 | Protein e | 570 | 8 | 2 | Excellent |
| Sample 20 | Protein f | 584 | 9.5 | 1 | Could not pass through. |

(continued)

|  | Protein | Viscosity (mPa·s) | Centrifugal Precipitate Amount (ml) | Physical Property (Sensory) | Homogenization Suitability |
|---|---|---|---|---|---|
| Sample 21 | Protein b | 512 | 11 | 1 | Could not pass through. |

The evaluation results of the mixes after homogenization of the samples 17 to 19, in which the preliminarily homogenized mixes could pass through, are shown in Table 10. As shown in Table 10, the samples 17 to 19 were protein-containing beverages which had a low precipitate amount and slight roughness and which were easy to drink. In particular, the samples 17 and 18, in which the soy proteins c and d were used, were beverages which had a low centrifugal precipitate amount, had no roughness or chalkiness at all and had excellent smoothness.

[Table 10]

[Table 10]

|  | Protein | Viscosity (mPa·s) | Average Centrifugal Precipitate Amount (ml) | Physical Property (Sensory) |
|---|---|---|---|---|
| Sample 17 | Protein c | 522 | 4.5 | 5 |
| Sample 18 | Protein d | 447 | 4.25 | 5 |
| Sample 19 | Protein e | 444.5 | 4.75 | 3 |

Here, the proteins c to e satisfied the condition below when measured by the measurement method below. On the other hand, the protein b and the protein f did not satisfy the condition below.

[Measurement Method]

Step A: An aqueous dispersion containing the Soy Protein Isolate at 6 mass% and the tofu at 6.7 mass% as the mass of the solid content is prepared.
Step B: The aqueous dispersion is heat pasteurized under the condition at 85°C for 10 minutes.
Step C: The aqueous dispersion after the heat pasteurization is homogenized at 5 MPa using a pressure homogenizer.

[Condition]

The flow rate of the aqueous dispersion after the heat pasteurization in the pressure homogenizer is 160 to 200 L/H in the step C.
From the results of Test Examples 2 to 4, it was found that the Soy Protein Isolate preferably satisfies the condition above.
Moreover, from the results of Test Examples 2 to 4, it was found that a protein-containing beverage in which the precipitate amount of protein after pasteurization is low and which is easy to drink can be prepared regardless of the pH of the protein-containing beverage, according to the invention.
Moreover, from the results of Test Examples 2 to 4, it was found that, by adjusting the total mass of the solid content of the tofu based on the total mass of the protein-containing beverage at 1 to 15 mass%, the acridity derived from the Soy Protein Isolate contained in the protein-containing beverage can be suppressed because the Soy Protein Isolate content can be suppressed to a small amount.
Furthermore, from the results of Test Examples 2 to 4, it was found that, by adjusting the Soy Protein Isolate based on the total mass of the protein at 40 to 90 mass%, the acridity derived from the Soy Protein Isolate contained in the protein-containing beverage can be suppressed.
Moreover, from the results of Test Examples 2 to 4, it was found that the protein-containing beverage according to the invention can be prepared when a step of dispersing at least an Soy Protein Isolate and tofu as raw materials containing protein in water is included.

# EP 4 659 589 A1

Industrial Applicability

According to the invention, a new protein-containing beverage in which precipitation of the Soy Protein Isolate after heat pasteurization is suppressed and a production method thereof can be provided.

## Claims

1. A protein-containing beverage comprising:

    an Soy Protein Isolate and tofu,
    wherein the total mass of the protein based on the total mass of the protein-containing beverage exceeds 6 mass%.

2. The protein-containing beverage according to claim 1, wherein the total mass of the solid content of the tofu based on the total mass of the protein-containing beverage is 1 to 15 mass%.

3. The protein-containing beverage according to claim 1 or 2, wherein the total mass of the Soy Protein Isolate based on the total mass of the protein is 40 to 90 mass%.

4. The protein-containing beverage according to claim 1 or 2, wherein the total mass of the protein is 2 to 6 when the total mass of the fat is regarded as 1.

5. The protein-containing beverage according to claim 1 or 2, wherein the Soy Protein Isolate satisfies the condition below when measured by the measurement method below.

    [Measurement Method]

    Step A: An aqueous dispersion containing the Soy Protein Isolate at 6 mass% and the tofu at 6.7 mass% as the mass of the solid content is prepared.
    Step B: The aqueous dispersion is heat pasteurized under the condition at 85°C for 10 minutes.
    Step C: The aqueous dispersion after the heat pasteurization is homogenized at 5 MPa using a pressure homogenizer.

    [Condition]
    The flow rate of the aqueous dispersion after the heat pasteurization in the pressure homogenizer is 160 to 200 L/H in the step C.

6. A method for producing a protein-containing beverage, comprising

    a step of dissolving raw materials containing protein in water,
    wherein the raw materials containing protein are at least an Soy Protein Isolate and tofu, and
    the step of dissolving the raw materials containing protein in water is a step of dissolving the raw materials containing protein in water in such a manner that the total mass of the protein based on the total mass of the obtained protein-containing beverage exceeds 6 mass%.

7. The method for producing a protein-containing beverage according to claim 6, wherein the isolated protein and the tofu are mixed in such a manner that the total mass of the solid content of the tofu based on the total mass of the protein-containing beverage becomes 1 to 15 mass%.

8. The method for producing a protein-containing beverage according to claim 6 or 7, wherein the Soy Protein Isolate is mixed in such a manner that the total mass of the Soy Protein Isolate based on the total mass of the protein becomes 40 to 90 mass%.

9. The method for producing a protein-containing beverage according to claim 6 or 7, wherein the Soy Protein Isolate satisfies the condition below when measured by the measurement method below.

    [Measurement Method]

Step A: An aqueous dispersion containing the Soy Protein Isolate at 6 mass% and the tofu at 6.7 mass% as the mass of the solid content is prepared.

Step B: The aqueous dispersion is heat pasteurized under the condition at 85°C for 10 minutes.

Step C: The aqueous dispersion after the heat pasteurization is homogenized at 5 MPa using a pressure homogenizer.

[Condition]

The flow rate of the aqueous dispersion after the heat pasteurization in the pressure homogenizer is 160 to 200 L/H in the step C.

## INTERNATIONAL SEARCH REPORT

| International application No. |
|---|
| **PCT/JP2024/003436** |

| A. | CLASSIFICATION OF SUBJECT MATTER |
|---|---|

*A23L 2/66*(2006.01)i; *A23L 2/38*(2021.01)i; *A23L 11/60*(2021.01)i
FI:  A23L2/00 J; A23L11/60; A23L2/38 D

According to International Patent Classification (IPC) or to both national classification and IPC

| B. | FIELDS SEARCHED |
|---|---|

Minimum documentation searched (classification system followed by classification symbols)

A23L2/66; A23L2/38; A23L11/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2003-102449 A (MORINAGA MILK INDUSTRY CO., LTD.) 08 April 2003 (2003-04-08) claims, examples, paragraphs [0005]-[0006] | 1-4, 6-8 |
| Y | JP 2008-022821 A (MORINAGA MILK INDUSTRY CO., LTD.) 07 February 2008 (2008-02-07) paragraph [0025] | 1-4, 6-8 |
| Y | JP 2008-148633 A (MORINAGA MILK INDUSTRY CO., LTD.) 03 July 2008 (2008-07-03) paragraph [0024] | 1-4, 6-8 |
| A | CN 101904361 A (JIANGNAN UNIVERSITY) 08 December 2010 (2010-12-08) entire text | 1-9 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **09 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/003436**

| Patent document cited in search report | | | Publication date (day/month/year) | Patent family member(s) | | | Publication date (day/month/year) |
|---|---|---|---|---|---|---|---|
| JP | 2003-102449 | A | 08 April 2003 | US<br>claims, examples, paragraphs [0009]-[0010]<br>WO<br>EP | 2005/0042352<br><br>2003/030661<br>1433389 | A1<br><br>A1<br>A1 | |
| JP | 2008-022821 | A | 07 February 2008 | US<br>paragraphs [0054]-[0056] | 2008/0026126 | A1 | |
| JP | 2008-148633 | A | 03 July 2008 | US<br>paragraphs [0060]-[0062] | 2008/0145510 | A1 | |
| CN | 101904361 | A | 08 December 2010 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6070042 A
- JP H05308900 A

- WO 199935920 A